Europäisches Patentamt

European Patent Office

Office européen des brevets

(11) Veröffentlichungsnummer: **0 272 405**
B1

(12) **EUROPÄISCHE PATENTSCHRIFT**

(45) Veröffentlichungstag der Patentschrift:
19.12.90

(51) Int. Cl.5: **E21B 43/22**

(21) Anmeldenummer: 87115627.9

(22) Anmeldetag: 24.10.87

(54) **Verfahren zur Gewinnung von Erdöl aus einer unterirdischen Lagerstätte durch Tensidfluten.**

(30) Priorität: 24.12.86 DE 3644386

(43) Veröffentlichungstag der Anmeldung:
29.06.88 Patentblatt 88/26

(45) Bekanntmachung des Hinweises auf die Patenterteilung:
19.12.90 Patentblatt 90/51

(84) Benannte Vertragsstaaten:
DE GB NL

(56) Entgegenhaltungen:
EP-A- 117 970
DE-A- 3 004 003
US-A- 4 457 373

(73) Patentinhaber: HÜLS AKTIENGESELLSCHAFT,
Patentabteilung / PB 15 - Postfach 13 20,
D-4370 Marl 1(DE)

(72) Erfinder: Balzer, Dieter, Dr., Talstrasse 21,
D-4358 Haltern(DE)

## Beschreibung

Bei der Gewinnung von Öl aus Speichergestein gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird gewöhnlich Wasser in eine oder mehrere Injektionsbohrungen der Formation eingepreßt und das Öl zu einer oder mehreren Produktionsbohrungen getrieben und dann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die zukünftige Ölverknappung volkswirtschaftlich erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Untertage-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Bei den Tensidprozessen unterscheidet man, je nach Tensidkonzentration, gegebenenfalls Tensidtyp und Zusätzen, zwischen tensidgestütztem Wasserfluten (ein Verfahren das z. B. zur Injektivitätserhöhung von Einpreßbohrungen dienen kann oder einen "Lowtension-Prozeß" darstellt), micellarem Fluten und Emulsionsfluten. Die Wirkung des Tensidflutens beruht in erster Linie auf einer starken Erniedrigung der Grenzflächenspannung zwischen Öl und Flutwasser. Des weiteren sind die Benetzbarkeit der Gesteinsoberfläche sowie die Mobilitätsverhältnisse von großer Bedeutung. Günstige Mobilitätsverhältnisse zwischen Öl und Wasser werden durch Polymere erzielt.

Die vorliegende Erfindung bezieht sich auf ein Verfahren zur Gewinnung von Öl durch Tensidfluten bzw. Micellar-Polymer-Fluten in mittel- bis höhersalinaren Lagerstätten.

Besonders bezieht sich die Erfindung auf ein Verfahren für Lagerstätten, die von starken Temperaturschwankungen oder einem Temperaturgradienten beherrscht werden.

Da die Temperatur des Speichergesteins im wesentlichen von dem Wärmefluß aus dem Erdinneren in den Oberflächenbereich bestimmt wird, beruhen nicht konstante Temperaturen entweder auf starken Lagerstättenneigungen oder auf einem Eingriff in das Naturgeschehen. Ein solcher Eingriff ist z. B. auch die Injektion von Wasser während des Wasserflutens. Lang andauerndes Wasserfluten, besonders von Hochtemperaturlagerstätten, führt häufig zur Ausbildung eines starken Temperaturgradienten. Besonders ausgeprägt ist dies bei den Hochtemperatur-Offshore-Lagerstätten, die mit kaltem Seewasser geflutet werden, was zu einer starken Abkühlung um die Injektionszonen führt. So sind z. B. bei Lagerstätten im Nordseebereich Temperaturspannen zwischen ca. 10 °C nahe der Injektionssonden und ca. 100 °C in entfernteren Bereichen bekannt.

Ein Tensidflutverfahren soll jedoch natürlich in dem gesamten Temperaturbereich optimal wirksam sein. Dies setzt selbstverständlich voraus, daß das Tensid unter Lagerstättenbedingungen lange Zeit stabil ist.

Ein weiteres Problem des Tensidflutens besteht darin, daß die meisten der dafür geeigneten Tenside, wie z. B. Alkyl-, Alkylaryl- oder Petroleumsulfonat, eine sehr niedrige Toleranzgrenze gegenüber der Salinität der Lagerstättenwässer besitzen. Schon Salzkonzentrationen von 1 000 ppm gelten vielfach als problematisch, wobei die Empfindlichkeit dieser Tenside gegenüber Erdalkaliionen besonders ausgeprägt ist. Als obere kritische Grenzkonzentration der Salinität werden 500 ppm genannt (US-PS 4 110 228). In Gegenwart höherer Salzkonzentrationen bilden sich bei Einsatz der genannten Tenside Fällungsprodukte in Form unlöslicher Salze. Hierdurch geht zum einen Substanz für die erwünschte grenzflächenaktive Wirkung an der Grenzfläche Wasser-Öl verloren, zum anderen können die Fällungsprodukte zu Verstopfungen der Formation führen. Nun besitzen viele Lagerstättenwässer wesentlich höhere Salinitäten; ein sehr beachtlicher Teil der nordamerikanischen Leichtöllagerstätten besitzt Salinitäten um 100 000 ppm und höher, wobei der Gehalt an gelösten Erdalkaliionen in den meisten Fällen beträchtlich ist. Auch das bei Offshore-Lagerstätten häufig zu Sekundärmaßnahmen injizierte Seewasser besitzt mit einem TDS-Wert von ca. 36 000 ppm und Erdalkaliionen von ca. 2 000 ppm eine weit oberhalb der Verträglichkeitsgrenze für Sulfonate liegende Salinität.

Typische Tenside, die selbst gegenüber extrem hohen Gesamtsalinitäten und entsprechenden Erdalkaliionenkonzentrationen tolerant sind und hochwirksam Öl zu mobilisieren vermögen, sind Verbindungen vom Typ der carboximethylierten Oxethylate, Ethersulfonate und Ethersulfate, wie sie in den US-PSS 4 293 428, 4 299 711, 4 485 873 sowie EP-B1-0 064 384 beschrieben werden. Während die Ethersulfate (vgl. DE-OS 25 58 548) aber als nicht-temperaturstabil angesehen werden müssen, gelten die carboximethylierten Oxethylate und die Ethersulfonate auch unter drastischen Bedingungen als langzeittemperaturstabil.

Carboximethylierte Oxethylate als Tenside zum Tensidfluten bzw. Micellar-Polymer-Fluten lassen sich für die gegebene Lagerstätte maßschneidern. Wie in den US-PSS 4 457 373 und 4 485 873 gezeigt wird, ist das Kriterium für diese Anpassung des Tensides an das gegebene Reservoirsystem die sogenannte Phasen-Inversions-Temperatur (PIT). Liegt die PIT des Systems Rohöl/Formationswasser/Tensid/gegebenenfalls Zusätze bei Lagerstättentemperatur oder bis zu 10 °C darüber, so ist eine optimale Wirkung des Tensids hinsichtlich Ölmobilisierung und Ölbankbildung zu erwarten. Eine durchaus übliche relativ geringfügige Abweichung der örtlichen Lagerstättentemperatur von ihrem Mittelwert um +5 °C beeinflußt die Tensidwirksamkeit hierbei nicht sonderlich. Starke Temperaturgradienten mit Temperaturspannen zwischen 10 und 100 °C jedoch beeinträchtigen die Wirkung der carboximethylierten Oxethylate drastisch. Dies läßt sich eindrucksvoll zeigen durch Messung der Grenzflächenspannung Öl/wäßrige Tensidlösung in Abhängigkeit der Temperatur (vgl. D. Balzer, Proceedings 2nd European Symposium Enhanced Oil Recovery, Paris 1982). Danach durchschreitet die Grenzflächenspannung des Systems Rohöl/Formationswasser/carboximethyliertes Oxethylat ein tiefes, schmales Minimum bei einer bestimmten Temperatur, die gewöhnlich nahe der PIT liegt. Bei deutlich niedrigeren oder höheren Temperaturen besitzt hingegen das Tensid für dieses Lagerstättensystem eine sehr viel geringere Grenzflächenaktivität und demzufolge eine eingeschränkte Wirksamkeit bei der Ölmobolisierung. So läßt sich mit einem carboximethylierten Oxethylat, angewendet auf ein Lagerstättensystem, wobei die PIT bei ca. 95 °C lag, bei 90 °C eine starke Mehrentölung in Form einer Ölbank beobachten. Senkt man hingegen die Versuchstemperatur auf 20 °C, so läßt sich nur wenig Restöl - und selbst das nur in Form einer Öl-in-Wasser-Emulsion - freisetzen.

Es bestand daher die Aufgabe, für den Einsatz der in mittel- bis hochsalinaren Lagerstättensystemen stark ölmobilisierend wirkenden und selbst unter drastischen Bedingungen als langzeittemperaturstabil geltenden carboximethylierten Oxethylate Bedingungen zu finden, die ihre Wirksamkeit auch in Lagerstätten mit zeitlichen und örtlichen Temperaturschwankungen gewährleisten.

Diese Aufgabe wurde überraschenderweise gelöst durch ein Verfahren zur Gewinnung von Öl aus unterirdischem Speichergestein, das mindestens durch eine Injektions- und eine Produktionsbohrung durchteuft ist durch Einpressen einer Lösung oder Dispersion eines carboximethylierten Oxalkylates der Formel R-$(OC_3H_6)_m(OC_2H_4)_n OCH_2COOM$, in der R einen linearen oder verzweigten aliphatischen Rest mit 6 bis 20 Kohlenstoffatomen, einen monoalkylaromatischen Rest mit 3 bis 18 Kohlenstoffatomen in der Alkylgruppe oder einen di- bzw. oligoalkylaromatischen Rest mit 1 bis 18 Kohlenstoffatomen pro Alkylgruppe, wobei die Gesamtzahl der Kohlenstoffatome in den Alkylketten 5 bis 40 beträgt, m 0 bis 20, n 3 bis 100, M ein Alkali- oder Erdalkalimetallion oder Ammonium bedeuten und der Carboximethylierungsgrad zwischen 10 und 100 % liegt, in eine Injektionsbohrung, das dadurch gekennzeichnet ist, daß das carboximethylierte Oxalkylat in Mischung mit einem Polyglucosylsorbitolfettsäureester (PGS-Ester) eingesetzt wird.

Der Polyglucosylsorbitolfettsäureester wird zweckmäßigerweise aus einem Polyglucosylsorbitol mit 2 bis 20 Glukoseeinheiten und einer gesättigten oder ungsättigten, verzweigten oder unverzweigten Fettsäure mit 6 bis 20, vorzugsweise 8 bis 18 C-Atomen im Verhältnis 2 : 1 bis 1 : 10 Moleküle/Glukoseeinheit hergestellt.

Polyglucosylsorbitole sind gewöhnlich durch enzymatische Hydrolyse und anschließende Hydrierung hergestellte Abbauprodukte von polymeren Kohlehydraten, wie z. B. Stärke. In Abhängigkeit von den Bedingungen des Hydrolyseschrittes gelangt man zu Produkten, die in der Anzahl der miteinander verknüpften Glukoseeinheiten differieren, wobei jeder beliebige Hydrolysegrad einstellbar ist. Selbstverständlich handelt es sich immer um einen mittleren Hydrolysegrad, da eine Verteilung an Glukoseeinheiten vorliegt. Nach einer groben Unterteilung kann man zweckmäßigerweise Polyglucosylsorbitol "I", "II" und "III" unterscheiden, wobei in geltender mittlerer Molmasse ca. 30, 12 bzw. 2 bis 3 Glukoseeinheiten pro Molekül gemeint sind. Mit Fettsäuren leicht verestern lassen sich besonders die Polyglucosylsorbitole mit nicht zu hoher Zahl von Glukoseeinheiten. Günstig sind die diesbezüglichen Verhältnisse bei 2 bis 3 Glukoseeinheiten, und nur diese Fettsäureester werden im Gemisch mit den carboximethylierten Oxethylaten im Verfahren der vorliegenden Erfindung eingesetzt. Zur Herstellung der PGS-Ester geeignete Fettsäuren sind gesättigte oder ungesättigte, verzweigte oder unverzweigte Carbonsäuren mit 6 bis 20 C-Atomen, vorzugsweise 8 bis 18 C-Atomen. Das Verhältnis der Fettsäure zu Polyglycosylsorbitol kann 2 : 1 bis 1 : 10 Moleküle/Glukoseeinheit betragen.

Die zu injizierende Tensidlösung oder -dispersion besitzt zweckmäßigerweise eine Konzentration von 0,1 bis 20 %.

Die Sluggröße der tensidhaltigen Flüssigkeiten sollte 0,01 bis 2 Porenvolumen (PV) betragen.

Die Massen des carboximethylierten Oxethylats verhalten sich zu denen des PGS-Esters zweckmäßigerweise wie 4 : 1 bis 1 : 4.

Nach der Injektion des Tensidslugs wird vorzugsweise Formations- oder Flutwasser in die Lagerstätte eingepreßt, wobei das Formations- oder Flutwasser zweckmäßigerweise ein wasserlösliches, viskositätserhöhendes Polymer enthält.

Vorzugsweise wird der Tensidmischung ein Cosolvent im Verhältnis 1 : 5 bis 5 : 1 zugesetzt.

Es können ein- oder mehrwertige Alkohole oder Alkylether von mehrwertigen Alkoholen als Cosolvent eingesetzt werden.

Die erfindungsgemäß einzusetzenden carboximethylierten Oxethylate lassen z. B. nach der DE-PS 24 18 444 durch Umsetzung von Oxethylaten der Formel R-$(OC_2H_4)_n H$ oder R-$(OC_2H_3)_m(OC_2H_4)_n H$ mit ei-

nem Salz der Chloressigsäure in Gegenwart von Alkalihydroxid oder anderen Basen herstellen. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16 C-Atomen oder einem Monoalkylarylrest mit 3 bis 18, vorzugsweise 4 bis 16 C-Atomen in der Alkylkette oder einen Dialkylaryl- bzw. Oligoalkylarylrest mit bis 18 C-Atomen pro Alkylgruppe, wobei die Gesamtzahl der Kohlenstoffatome in den Alkylketten 4 bis 40 beträgt, m kann Werte von 0 bis 20, vorzugsweise von 0 bis 10, insbesondere von 1 bis 20, annehmen. n kann Werte von 3 bis 100, vorzugsweise von 4 bis 50, insbesondere von 4 bis 30, annehmen. Das Kation M kann Natrium, Kalium, Lithium, Ammonium, Calcium oder Magnesium sein. Als Alkohole, deren Oxethylate den Carboximethylaten zugrunde liegen, lassen sich z. B. einsetzen: Hexylalkohol, Octylalkohol, Nonylalkohol, Decylalkohol, Undecylalkohol, Lauryl-, Tridecyl-, Myristyl-, Palmityl- und Stearylalkohol, aber auch ungesättigte Alkohole, wie z. B. Oleylalkohol. Die Alkylkette kann dabei normal- oder verzweigtkettig sein. Als Alkylphenole lassen sich z. B. heranziehen: Butylphenol, Pentylphenol, Hexylphenol, Octylphenol, Nonylphenol, Decylphenol, Undecylphenol, Dodecylphenol, Tridecylphenol sowie die entsprechenden Dialkylphenole, wie z. B. 2-Methyl-4-Tridecylphenol, 2-Dodecyl-4-Ethylphenol, Dinonylphenol, etc. Die Alkylkette kann normal oder verzweigt sein. Es lassen sich auch Trialkylphenole einsetzen, wie Tri-n-butylphenol, Tri-t-butylphenol, Dimethylnonylphenol, oder Tetraalkylphenole, wie Tetrabutylphenol. Die Oxethylierung kann in Gegenwart katalytischer Mengen Alkalihydroxid mit 0 bis 20, vorzugsweise 0 bis 10, insbesondere 1 bis 20 Mol Propylen oxid/Mol Hydroxylverbindung und danach mit 3 bis 100, vorzugsweise 4 bis 50, insbesondere von 4 bis 30 Mol Ethylenoxid/Mol Hydroxylverbindung durchgeführt werden. Die so entstehenden Oxethylate sind Homologengemische. Die sich anschließende Carboximethylierung kann bei entsprechender Verfahrensweise vollständig sein, so daß die carboximethylierten Oxethylate rein anionische Tenside sind. Alternativ bei nicht vollständiger Carboximethylierung enthalten die Produkte noch mehr oder minder große Mengen nicht umgesetztes Oxethylat. Mit der Formel $R-(OC_3H_6)_m(OC_2H_4)_nOCH_2COOM$ ist daher häufig ein Gemisch mit unterschiedlichen Mengen an nicht umgesetztem Oxethylat gemeint. Demgemäß läßt sich ein Carboximethylierungsgrad definieren. Es hat sich gezeigt, daß Mischungen mit einem Carboximethylierungsgrad zwischen 10 und 100 %, vorzugsweise zwischen 50 und 100 %, und ganz besonders zwischen 70 und 100 %, sehr wirksam sind.

Die im Gemisch mit den carboximethylieren Oxethylaten erfindungsgemäß eingesetzten Polyglucosylsorbitolfettsäureester können aus den Polyglucosylsorbitolen mit 2 bis 20 Glukoseeinheiten, vorzugsweise 2 bis 15 Glukoseeinheiten, mit Fettsäuren in Gegenwart von Basenkatalysatoren, wie NaOH, bei analogen Bedingungen hergestellt werden, wie sie z. B. für Sorbitanester aus Anhydrosorbitol gelten (vgl. US-PS 4 297 290). Die hierbei eingesetzten Fettsäuren sind gesättigte bzw. ungesättigte, verzweigte oder unverzweigte Fettsäuren mit 6 bis 20, vorzugsweise 8 bis 18 C-Atomen, wie z. B. Hexansäure, Octansäure, Decansäure, Laurinsäure, Myristinsäure, Palmitinsäure, Stearinsäure, Arachinsäure, sowie verschiedene Isomere, Säuren mit Doppelbindungen, wie Myristoleinsäure, Ölsäure, Erucasäure, Linolsäure, etc. Als Fettsäuren geeignet sind selbstverständlich auch entsprechende Fettsäuregemische. Besonders bevorzugt sind Fettsäuregemische, die bei der Spaltung der natürlichen Fette gebildet werden. Das Verhältnis der Fettsäuren zu Polyglucosylsorbitol kann 2 : 1 bis 1 : 10, vorzugsweise 2 : 1 bis 1 : 6 Moleküle/Glukoseeinheit betragen.

In vielen Versuchen hat sich gezeigt, daß der Zusatz von Cotensiden von Vorteil ist. In ausreichenden Mengen zugesetzt, wird die teilweise stark trübe Dispersion der wirksamen Tensidmischung in eine wasserklare Lösung überführt. Gleichzeitig nimmt der tensidbedingte Entölungsgrad bei linearen Verdrängungsversuchen an Bohrkernen zu. Geeignete Cotenside sind einwertige Alkohole mit 3 bis 8 C-Atomen, wie z. B. Propanolisomere, Butanolisomere, Pentanolisomere, etc., oder mehrwertige Alkohole mit 3 bis 10 C-Atomen, wie Propandiol, Butandiol, Pentandiol, etc., oder Alkylether mehrwertiger Alkohole, wie Ethylenglykolmonoethylether, Ethylenglykolmonoisopropylether, Ethylenglykolmonobutylether, Diethylenglykolmonobutylether, etc. Die erfindungsgemäßen Tensid- bzw. Tensid-Cotensidgemische müssen an die Bedingung des betreffenden Lagerstättensystems angepaßt werden. Kritische Größen sind hierbei die Bestandteile des Lagerstättenwassers, und, sofern dieses nicht reinjiziert wird, auch die Zusammensetzung des Flutwassers, ferner der Charakter des Lagerstättenöls, die Temperatur bzw. der Temperaturbereich der Lagerstätte, gegebenenfalls die Zusammensetzung der Gasphase und der Lagerstättendruck. Vorversuche zur Anpassung des Tensidsystems an die Lagerstättenbedingungen sind literaturbekannte Phasenuntersuchungen etwa im Sinne eines Phasenvolumendiagramms (vgl. H. Kraft, G. Pusch, SPE/DOE-Paper 10714), wobei an einer Mischung aus Lagerstättenöl, Lagerstättenwasser bzw. Flutwasser und Tensid bzw. Tensid/Cotensid die Volumina der oberen, mittleren und unteren Phase in Abhängigkeit der Temperatur bestimmt werden. Wünschenswert ist eine solche Tensid- bzw. Tensid/Cotensidkombination, die zu einem weitgehend temperaturunabhängigen Phasenverhalten mit ausgeprägter Bildung einer mittelphasigen Mikroemulsion führt. Ein solcher Befund allein ist allerdings nicht hinreichend. So haben Untersuchungen am System Dekan/Seewasser in Gegenwart von Alkylbenzolsulfonat/Nonylphenoloxethylaten/i- Butanol zwar das gewünschte weitgehend temperaturunabhängige Phasenverhalten, nicht jedoch die parallel hierzu in Flutversuchen untersuchte Entölung gezeigt. Weitere notwendige Vorversuche zur Anpassung des Tensidsystems an die Lagerstätte, die unmittelbar dessen Wirksamkeit aufzeigen, bestehen daher in linearen Verdrängungsversuchen an Modellformationen aus Sandstein oder Sand, den sogenannten Flutversuchen, wie in den Beispielen beschrieben. Im Unterschied zu den Phasenuntersuchungen, bei denen ein während des Tensidflutens kaum realisierter Gleichgewichtszustand betrachtet wird, berücksichtigen die Verdrängungsversuche die realiter in der Lagerstätte sich abspielenden Ungleichgewichtsprozesse.

Flutversuche möglichst an Originalbohrkernmaterial und, soweit notwendig, unter Lagerstättenbedingungen, dienen einer labormäßigen Optimierung des Tensid- bzw. Tensid/Cotensidsystems hinsichtlich der Flüssigkeitsform des Wirkstoffs (Lösung, Dispersion oder Emulsion), seiner Konzentration und seines Volumens, ferner hinsichtlich der Art, Konzentration und des Volumens der als Mobilitätspuffer zu verwendenden Polymerlösung.

Aufgrund dieser Vorversuche wird die Tensidlösung oder Dispersion mit Injektionspumpen in die Lagerstätte eingebracht. Dieses geschieht in Form von Slugs, d. h. begrenzter Volumina von 0,01 bis 2 PV (= Porenvolumen der Lagerstätte), vorzugsweise 0,02 bis 1,2 PV. Die Größe des Tensidslugs richtet sich nach der Tensidkonzentration und nach der Wirtschaftlichkeit. Gewöhnlich liegt die Tensidkonzentration zwischen 0,1 und 20 %, vorzugsweise zwischen 0,2 und 10 %. In dieser Tensidkonzentration sind nur das carboximethylierte Oxethylat und der Polyglucosylsorbitolfettsäureester enthalten. Die Massen beider verhalten sich zueinander wie 1 : 4 bis 4 : 1, vorzugsweise 1 : 3 bis 3 : 1.

Wird ein Cotensid zugesetzt, so soll sich seine Masse zu der der Tensidmischung verhalten wie 1 : 5 bis 5 : 1.

Zweckmäßigerweise wird vor der Injektion der Tensidflüssigkeit mit Wasser geflutet, wobei als Flutwasser vorzugsweise das produzierte Formationswasser eingesetzt wird. In speziellen Fällen kann es zweckmäßig sein, mit einem Wasser anderer Zusammensetzung als der des Formationswassers zu fluten. Dies kann logistische Gründe haben, oder es empfiehlt sich, die Lagerstätte hinsichtlich einer bestimmten Salinität zu konditionieren. Die Größe des Flutwasserslugs beträgt 0,01 bis 4 PV, vorzugsweise 0,1 bis 2 PV.

Sowohl aus Gründen der Mobilitätskontrolle - wie erwähnt - als auch zum Schutz der Tensidflüssigkeiten vor eindringendem Flutwasser kann man nach der letzten Tensidflüssigkeit Polymerlösung in die Lagerstätten injizieren. Hierzu wird ein Polymer oder ein Polymergemisch in einer solchen Konzentration in dem Flutwasser gelöst, daß die Viskosität 1,2- bis 10mal so hoch ist wie die des Öls unter Lagerstättenbedingungen. Als Polymere kommen Biopolymere, wie beispielsweise Xanthan Gum, oder Cellulosederivate und Polyacrylamide infrage, die in Gegenwart der vorgegebenen Salinität noch eine ausreichende Viskosität besitzen und keine Fällungen zeigen. Zweckmäßigerweise schließt sich an das Injizieren der Polymerlösung normales Wasserfluten als Trieb an. Dieses wird solange fortgesetzt, wie sich wirtschaftlich Öl gewinnen läßt.

Die nachfolgenden Beispiele sollen das erfindungsgemäße Verfahren erläutern. Sie sind lineare Verdrängungsversuche entweder an Sandschüttungen oder an Sandsteinbohrkernen als labormäßige Modellformationen.

Zur Herstellung einer Sandschüttung wurde ein thermostatisierbares Stahlrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang, mit kantengerundetem Quarzsand beschickt. Sodann wurde mittels einer Membranpumpe die Sandschüttung mit Salzwasser benetzt und durch einen Thermostaten auf die gewünschte Temperatur gebracht. Mit Hilfe von Drucktransmittern wurde die Permeabilität der Schüttung bestimmt. Sodann erfolgte Sättigung mit einem Modellöl (n-Dekan oder Rohöl), wobei sich gleichzeitig der Haftwassergehalt bestimmen ließ.

Anschließend wurden mit einer Geschwindigkeit von ca. 1 m/d 1,5 PV (1 PV ca. 750 ml) Salzwasser injiziert, wobei sich ein Verwässerungsgrad von 98 bis 100 % einstellte. Nach diesem sogenannten Wasserfluten wurden zunächst das Tensidgemisch und anschließend die Polymerlösung, beide als Slug, injiziert. Als Trieb wurde weiteres Salzwasser eingepreßt.

Zur Herstellung von Modellformationen aus konsolidiertem Gestein wurden zylindrische Bohrkerne von 50 cm Länge und 8 cm Durchmesser aus Bentheimer Sandstein in Epoxidharz eingebettet. Die Porenvolumina betrugen ca. 600 ml, die Flutgeschwindigkeit ca. 0,5 m/d. Die Temperierung bei den in Harz eingebetteten Kernen erfolgte mittels eines offenen Temperaturbades. Ansonsten bestanden keine Unterschiede bei dem Betrieb dieser Modellformationen im Vergleich zu dem an Sandschüttungen. Bei allen Verdrängungsversuchen wurden nach der Injektion von 0,3 PV Tensidsystem 0,6 PV einer 0,2prozentigen Lösung von Polymer-Flocon 4800 (Xanthan, Pfizer) in dem betreffenden Salzwasser in die Formation eingepreßt.

Beispiele 1 bis 10

Die erfindungsgemäßen Beispiele sind in der folgenden Tabelle dargestellt. Es wurden folgende Substanzen eingesetzt:

Sec: D n-Dekan 96 %
N 35 ° API-Rohöl
61 % paraffinische, 16 % naphthenische, 23 % aromatische Kohlenwasserstoffe
eta

EP 0 272 405 B1

20 °C 6 mPa s
Salzwasser: S synthetisches Seewasser
1,12 % $Na^+$, 0,035 % $K^+$, 0,047 % $Ca^{++}$, 0,133 % $Mg^{++}$, 2,03 % $Cl^-$, 0,27 % $SO_4{}_4{}^{2-}$
T synthetisches Formationswasser
1,51 % $Na^+$, 0,035 % $K^+$, 0,047 % $Ca^{++}$, 0,133 % $Mg^{++}$, 2,64 % $Cl^-$, 0,27 % $SO_4{}^{2-}$

Carboximethylierte Oxethylate: $C_1$ carboximethyliertes Nonylphenoloxethylat-Natriumsalz mit 5,9 Mol EO/Mol, Carboximethylierungsgrad (CM) 81 %
$C_2$ carboximethyliertes Nonylphenoloxethylat-Natriumsalz mit 5,0 Mol EO/Mol, CM 90 %
$C_3$ carboximethyliertes Nonylphenoloxethylat-Natriumsalz mit 6,0 Mol EO/Mol, CM 81 %
$C_4$ carboximethyliertes Dinonylphenoloxethylat-Natriumsalz mit 13 Mol EO/Mol, CM 86 %
$C_5$ carboximethyliertes Nonylphenoloxethylat-Natriumsalz mit 8 Mol EO/Mol, CM 88 %

Polyglucosylsorbitolfettsäureester: $D_1$ PGS-III*-Kokosfettsäure Edenor K 8-18 (Henkel)-Ester, Molverhältnis Glukose-Säure 1 : 1
* PGS III bedeutet ein Polyglucosylsorbitol mit ca. 2 bis 3 Glukoseeinheiten pro Molekül

$D_2$ PGS-III*-Ölsäure (1 : 1)
$D_3$ PGS-III*-Palmitinsäure (1 : 1)
$D_4$ PGS-III*-Palmitinsäure (1 : 1)
$D_5$ PGS-II**-Rübölfettsäure (4 : 1)
* PGS III bedeutet ein Polyglucosylsorbitol mit ca. 2 bis 3 Glukoseeinheiten pro Molekül * PGS III bedeutet ein Polyglucosylsorbitol mit ca. 2 bis 3 Glukoseeinheiten pro Molekül *PGS III bedeutet ein Polyglucosylsorbitol mit ca. 2 bis 3 Glukoseeinheiten pro Molekül ** PGS II bedeutet ein Polyglucosylsorbitol mit ca. 12 Glukoseeinheiten Cotenside: $E_1$ Isobutanol (99,5 %)
$E_2$ n-Butanol (99,9 %)
$E_3$ Ethylenglykolmonobutylether (99 %)
$E_4$ Ethylenglykolmonoisopropylether (99 %)

Die Beispiele (Tabelle) zeigen, daß durch die erfindungsgemäßen Tensid-Cotensidgemische eine weitgehende Tertiär-Entölung über einen sehr breiten Temperaturbereich möglich ist.

6

Tabelle

| Nr. | Formation Permeab. (D) | | Öl | Salz- wasser | Temp. (°C) | Tensidsystem (%) carboximeth. Oxethylat | PGS-Fettsäu- reester | Cotensid | | $\Delta E_W$* (% OOIP) | $\Delta E_T$* | Deltap** (bar/m) |
|---|---|---|---|---|---|---|---|---|---|---|---|---|
| 1 | Kern, | 2,0 | D | S | 20 | $C_1$, 2 % | $D_1$, 2 % | $E_4$, | 4 % | 52 | 25 | 0,8 |
| 2 | Sand, | 1,0 | D | S | 60 | $C_1$, 2 % | $D_1$, 2 % | $E_4$, | 4 % | 82 | 15 | 1,2 |
| 3 | Kern, | 2,2 | D | S | 20 | $C_2$, 2 % | $D_1$, 2 % | $E_2$, | 4 % | 52 | 33 | 0,5 |
| 4 | Sand, | 0,7 | D | S | 60 | $C_2$, 2 % | $D_1$, 2 % | $E_2$, | 4 % | 84 | 14 | 1,5 |
| 5 | Sand, | 0,6 | D | S | 90 | $C_2$, 2 % | $D_1$, 2 % | $E_2$, | 4 % | 83 | 10 | 1,5 |
| 6 | Kern, | 1,5 | D | S | 50 | $C_3$, 2 % | $D_2$, 2 % | $E_3$, | 4 % | 53 | 30 | 0,6 |
| 7 | Kern, | 2,0 | D | S | 70 | $C_4$, 2 % | $D_3$, 2 % | $E_1$, | 4 % | 55 | 24 | 1,1 |
| 8 | Kern, | 1,7 | N | S | 70 | $C_4$, 2 % | $D_3$, 2 % | $E_1$, | 4 % | 52 | 15 | 2,0 |
| 9 | Kern, | 2,0 | D | T | 50 | $C_5$, 2 % | $D_4$, 2 % | $E_2$, | 6 % | 51 | 12 | 1,1 |
| 10 | Kern, | 1,8 | D | S | 60 | $C_3$, 2 % | $D_5$, 2 % | $E_2$, | 6 % | 67 | 28 | 1,5 |

* $\Delta E_W$ bzw. $\Delta E_T$ bedeuten die Entölung (% OOIP) mittels Wasserfluten bzw. nachfolgendem Tensidfluten
** Deltap ist der maximale Druckgradient

EP 0 272 405 B1

**Patentansprüche**

1. Verfahren zur Gewinnung von Erdöl aus einer unterirdischen Lagerstätte, die mindestens durch eine Injektions- und eine Produktionsbohrung durchteuft ist, durch Einpressen einer Lösung oder Dispersion eines carboximethylierten Oxethylats der Formel $R\text{-}(OC_3H_6)_m(OC_2H_4)_nOCH_2COOM$, in der R einen linearen oder verzweigten aliphatischen Rest mit 6 bis 20 Kohlenstoffatomen, oder einen alkylaromatischen Rest mit 3 bis 18 Kohlenstoffatomen in der Alkylgruppe oder einen di- bzw. oligoalkylaromatischen Rest mit 1 bis 18 Kohlenstoffatomen pro Alkylgruppe, wobei die Gesamtzahl der Kohlenstoffatome in den Alkylketten 5 bis 40 beträgt, m 0 bis 20, n 3 bis 100, M ein Alkali- oder Erdalkalimetallion oder Ammonium bedeuten und der Carboximethylierungsgrad zwischen 10 und 100 % liegt, in eine Injektionsbohrung,
dadurch gekennzeichnet,
daß das carboximethylierte Oxethylat in Mischung mit einem Polyglucosylsorbitolfettsäureester eingesetzt wird.

2. Verfahren nach Anspruch 1,
dadurch gekennzeichnet,
daß der Polyglucosylsorbitolfettsäureester aus einem Polyglucosylsorbitol mit 2 bis 20 Glukoseeinheiten und einer gesättigten oder ungesättigten, verzweigten oder unverzweigten Fettsäure mit 6 bis 20 Kohlenstoffatomen im Verhältnis 2 : 1 bis 1 : 10 Moleküle/Glukoseeinheit hergestellt wird.

3. Verfahren nach den Ansprüchen 1 und 2,
dadurch gekennzeichnet,
daß die zu injizierende Tensidmischung, in Formations- oder Flutwasser gelöst oder dispergiert, eine Konzentration von 0,1 bis 20 % besitzt.

4. Verfahren nach den Ansprüchen 1 bis 3,
dadurch gekennzeichnet,
daß die Sluggröße der tensidhaltigen Flüssigkeit 0,01 bis 2 Porenvolumen beträgt.

5. Verfahren nach einem der Ansprüche 1 bis 4,
dadurch gekennzeichnet,
daß sich die Massen des carboximethylierten Oxethylats zu denen des Polyglucosylsorbitolfettsäureesters verhalten wie 4 : 1 bis 1 : 4.

6. Verfahren nach einem der Ansprüche 1 bis 5,
dadurch gekennzeichnet,
daß nach der Injektion des Tensidslugs Formations- oder Flutwasser in die Lagerstätte eingepreßt wird.

7. Verfahren nach Anspruch 6,
dadurch gekennzeichnet,
daß das Formations- oder Flutwasser ein wasserlösliches, viskositätserhöhendes Polymer enthält.

8. Verfahren nach einem der Ansprüche 1 bis 7,
dadurch gekennzeichnet,
daß der Tensidmischung ein Cosolvent im Verhältnis 1 : 5 bis 5 : 1 zugesetzt wird.

9. Verfahren nach Anspruch 8,
dadurch gekennzeichnet,
daß ein- oder mehrwertige Alkohole oder Alkylether von mehrwertigen Alkoholen als Cosolvent eingesetzt werden.

**Claims**

1. A process for the recovery of oil from a subterranean deposit, which is bored at least through one injection well and one production well, by injection into an injection well of a solution or dispersion of a carboxymethylated oxyethylate of the formula
$R\text{-}(OC_3H_6)_m(OC_2H_4)_nOCH_2COOM$
in which R denotes a linear or branched aliphatic radical of 6 to 20 carbon atoms or an alkylaromatic radical of 3 to 18 carbon atoms in the alkyl group or a di-or oligoalkylaromatic radical of 1 to 18 carbon atoms per alkyl group, the total number of carbon atoms in the alkyl chains being 5 to 40, m denotes 0 to 20, n denotes 3 to 100, M denotes an alkali metal or alkaline earth metal ion or ammonium and the degree of carboxymethylation is from 10 to 100%, characterised in that the carboxymethylated oxyethylate is used in admixture with a polyglycosylsorbitol fatty acid ester.

2. A process according to claim 1, characterised in that the polyglycosylsorbitol fatty acid ester is obtained from a polyglycosylsorbitol having 2 to 20 glucose units and a saturated or unsaturated branched or unbranched fatty acid of 6 to 20 carbon atoms, in the ratio 2:1 to 1:10 molecules per glucose unit.

3. A process according to any one of claims 1 and 2, characterised in that the surfactant mixture to be injected, dissolved in formation water or flooding water, has a concentration of 0.1 to 20%.

4. A process according to any one of claims 1 to 3, characterised in that the slug size of the liquid containing surfactant is 0.01 to 2 pore volumes (PV).

5. A process according to any one of claims 1 to 4, characterised in that the ratio of the mass of the carboxymethylated oxyethylate to that of the polyglycosylsorbitol fatty acid ester is from 4:1 to 1:4.

6. A process according to any one of claims 1 to 5, characterised in that after the injection of the slug of surfactant formation water or flooding water is injected into the reservoir.

7. A process according to claim 6, characterised in that the formation water or flooding water contains a water-soluble polymer which increases its viscosity.

8. A process according to any of claims 1 to 7, characterised in that a co-surfactant is used with the surfactant in the ratio of 1:5 to 5:1.

9. A process according to claim 8, characterised in that monohydric or polyhydric alcohols or alkylethers of polyhydric alcohols are used as co-surfactant.

**Revendications**

1. Procédé pour l'obtention de pétrole à partir d'un gisement souterrain traversé au moins par un forage d'injection et par un forage de production, par envoi sous pression, dans un forage d'injection, d'une solution ou dispersion d'un oxéthylat carboxyméthylé de formule

R-(OC$_3$H$_6$)$_m$(OC$_2$H$_4$)$_n$OCH$_2$COOM

dans laquelle R représente un radical aliphatique linéaire ou ramifié comportant de 6 à 20 atomes de carbone, ou un radical alkyl-aromatique comportant de 3 à 18 atomes de carbone dans le groupe alkyle, ou un radical di- ou oligo-alkyl-aromatique comportant de un à 18 atomes de carbone par groupe alkyle, le nombre total des atomes de carbone dans les chaînes alkyle étant de 5 à 40, $\underline{m}$ a une valeur de zéro à 20, $\underline{n}$ a une valeur de 3 à 100, $\underline{M}$ représente un ion de métal alcalin ou alcalino-terreux, ou de l'ammonium, et le degré de carboxyméthylation se situe entre 10 et 100%, caractérisé par le fait que l'oxéthylat carboxyméthylé est utilisé en mélange avec un ester de polyglucosyl-sorbitol et d'acide gras.

2. Procédé selon la revendication 1, caractérisé par le fait que l'ester de polyglucosyl-sorbitol et d'acide gras est préparé à partir d'un polyglucosyl-sorbitol comportant de 2 à 20 unités glucose et d'un acide gras saturé ou non-saturé, ramifié ou non-ramifié, qui comporte de 6 à 20 atomes de carbone, dans une proportion de 2:1 à 1:10 unités de glucose par molécule.

3. Procédé selon les revendications 1 et 2, caractérisé par le fait que le mélange tensio-actif à injecter, dissous ou dispersé dans de l'eau de formation ou de l'eau d'inondation, présente une concentration de 0,1 à 20%.

4. Procédé selon les revendications 1 à 3, caractérisé par le fait que l'importance du volume de liquide renfermant le tensio-actif est de 0,01 à 2 volumes de pores.

5. Procédé selon l'une des revendications 1 à 4, caractérisé par le fait que le rapport entre les masses de l'oxéthylat carboxyméthylé et celles de l'ester d'acide gras et de poly-glucosyl-sorbitol est de 4:1 à 1:4.

6. Procédé selon l'une des revendications 1 à 5, caractérisé par le fait qu'après l'injection du volume de tensio-actif, on envoie sous pression dans le gisement de l'eau de formation ou de l'eau d'inondation.

7. Procédé selon la revendication 6, caractérisé par le fait que l'eau de formation ou l'eau d'inondation renferme un polymère soluble dans l'eau, augmentant la viscosité.

8. Procédé selon l'une des revendications 1 à 7, caractérisé par le fait qu'au mélange de tensio-actif on ajoute un co-solvant dans une proportion de 1:5 à 5:1.

9. Procédé selon la revendication 8, caractérisé par le fait que l'on utilise, comme co-solvant, des mono- ou poly-alcools ou des éthers alkyliques de poly-alcools.